# EUROPÄISCHE PATENTANMELDUNG

(11) **EP 3 731 396 A1**
(43) Veröffentlichungstag der Anmeldung: **28.10.2020**
(21) Anmeldenummer: 19171155.5
(22) Anmeldetag: 25.04.2019
(51) Int. Cl.: H02M 3/335, H01F 27/28

(54) **GALVANISCH TRENNENDER DC-DC WANDLER MIT TRANSFORMATOR**

(71) Anmelder: Siemens Aktiengesellschaft, 80333 München (DE)
(72) Erfinder: Lutze, Marcel, 90459 Nürnberg (DE); Pfeifer, Markus, 90455 Nürnberg (DE)

(57) **Zusammenfassung**

Die Erfindung betrifft einen Gleichspannungswandler (1), der als LLC-Gleichspannungswandler oder als Dual Active Bridge (DAB) Gleichspannungswandler mit Serienresonanzkreis(SRC) ausgebildet ist und einen Transformator (2) mit einer Primärwicklung (5) und einer Sekundärwicklung (6), die um einen Magnetkern (7) angeordnet sind, einen ersten Resonanzkreis (3) mit einem ersten Resonanzkondensator (*C*_{*s*,1}) und einem ersten Schaltnetzwerk von Schaltelementen (*M*₁ bis *M*₄) sowie einen zweiten Resonanzkondensator (*C*_{*s*,2}) und ein zweites Schaltnetzwerk von Schaltelementen (*M*₅ bis *M*₈) umfasst. Der erste und der zweite Resonanzkondensator (*C*_{*s*,1},*C*_{*s*,2}) sind jeweils eingangs- beziehungsweise ausgangsseitig in Reihe zum Transformator (2) geschaltet und für eine Resonanzfrequenz eingerichtet, die kleiner als die für den Betrieb des Transformators (2) vorgesehene Übertragungsfrequenz ist. Die Primärwicklung (5) und die Sekundärwicklung (6) sind derart angeordnet und beabstandet, dass die Streuinduktiviät (*L_{σ}*) des Transformators (2) zwischen 1 Mikrohenry und 10 Mikrohenry, vorzugsweise zwischen 1 Mikrohenry und 5 Mikrohenry beträgt.

## Beschreibung

Die Erfindung betrifft einen Gleichspannungswandler mit einem Transformator und einem eingangsseitigen Resonanzkreis gemäß dem Oberbegriff des Anspruchs 1.

Aus dem Stand der Technik bekannte galvanisch getrennte Gleichspannungswandler, im Folgenden auch als DC-DC Wandler bezeichnet, weisen einen Transformator mit einem Transformatorübersetzungsverhältnis n:1 auf. Derartige DC-DC Wandler sind im Allgemeinen im Bauraum dann am kleinsten, wenn sie für eine Gleichspannungswandlung im Bereich des Transformatorübersetzungsverhältnisses genutzt und ausgelegt werden.

Besonders vorteilhaft sind derartige Gleichspannungswandler als resonante DC-DC Wandler aufgebaut, welche primär- und/oder sekundärseitig einen Resonanzkreis umfassen und die in der Nähe der jeweiligen Resonanzfrequenz des Resonanzkreises beziehungsweise der Resonanzkreise betrieben werden.

Über dem Resonanznetzwerk, das mindestens einen Resonanzkreis umfasst, prägt sich durch den quasi-resonanten Betrieb nur ein geringer Spannungsabfall aus. Eine als LLC bezeichnete Schaltungstopologie (umfassend eine erste Induktivität L parallel zu einem idealen Transformator, eine zweite Induktivität L in Serie zu dem idealen Transformator sowie als eine Kapazität C einen zusätzlichen Kondensator) umfasst als Schaltelement beispielsweise ein als Siliciumcarbid (SiC) Metal Oxide Semiconductor Field-Effect Transistor (MOSFET) ausgebildetes Schaltelement, mit dem ein solcher LLC Gleichspannungswandler verlustarm in einem spannungslosen Schaltbetrieb (Zero Voltage Switching Betrieb) verlustarm geschaltet wird.

Zur Vermeidung von Nachteilen derartiger LLC Gleichspannungswandler sind insbesondere für bidirektionale DC-DC Wandler Dual Active Bridge (DAB) Gleichspannungswandler mit einem Serienresonanzkreis (SRC) vorgeschlagen worden, welche, bei sonst gleicher Schaltungstopologie, im Unterschied zu einem herkömmlichen LLC Gleichspannungswandler zusätzlich eine aktive Taktung auf der Sekundärseite aufweist. Das Pulsmuster der aktiven Taktung auf der Sekundärseite ist dabei gegenüber dem Pulsmuster der Taktung auf der Primärseite um einen Phasenwinkel verschoben. Durch Anpassung des Phasenwinkels kann die Ausgangsspannung des DC-DC Wandlers weitgehend unabhängig von der Eingangsspannung geregelt werden.

Ein bidirektionaler DAB SRC DC-DC Wandler weist neben dem Transformator und den kapazitiven Resonanzelementen auch induktive Resonanzelemente auf, welche in den primär- und/oder sekundärseitigen Resonanzkreis integriert sind. Mittels dieser Resonanzelemente können das Resonanznetzwerk symmetrisch aufgebaut und somit ein beidseitig gleiches Übertragungsverhalten erzielt sowie die Serienresonanzinduktivität insgesamt erhöht werden.

Der Erfindung liegt die Aufgabe zugrunde, einen verbesserten Gleichspannungswandler anzugeben.

Die Aufgabe wird erfindungsgemäß durch einen Gleichspannungswandler mit den Merkmalen des Anspruchs 1 gelöst.

Vorteilhafte Ausgestaltungen der Erfindung sind Gegenstand der Unteransprüche.

Ein Gleichspannungswandler kann als LLC-Gleichspannungswandler umfassend als eine erste Induktivität L die Magnetisierungsinduktivität des Transformators, als eine zweite Induktivität L die Streuinduktivität des Transformators sowie als eine Kapazität C einen zusätzlichen Kondensator oder als Dual Active Bridge (DAB) Gleichspannungswandler mit Serienresonanzkreis (SRC) ausgebildet sein.

Ein solcher Gleichspannungswandler umfasst einen Transformator mit einer Primärwicklung und einer Sekundärwicklung, die um einen Magnetkern angeordnet sind. Der Magnetkern besteht aus magnetisch leitfähigem Material, beispielsweise aus Ferrit. In einer Ersatzschaltung kann der Transformator als Zweitor dargestellt werden, bei welchem parallel zum Ausgangstor eine Parallelschaltung einer Magnetisierungsinduktivität mit der Kapazität und einem Ohmschen Widerstand angeordnet ist und in Reihe zum Eingangstor eine Streuinduktivität angeordnet ist.

Ferner umfasst ein solcher Gleichspannungswandler einen ersten Resonanzkreis mit einem ersten Resonanzkondensator und einem ersten Schaltnetzwerk, das so angeordnet und eingerichtet ist, dass der erste Resonanzkreis von einer Gleichspannungsquelle gespeist erregbar ist, sowie einen zweiten Resonanzkondensator und ein zweites Schaltnetzwerk.

Der erste und der zweite Resonanzkondensator sind jeweils eingangs- beziehungsweise ausgangsseitig in Reihe zum Transformator geschaltet und für eine Resonanzfrequenz eingerichtet, die kleiner als die für den Betrieb des Transformators vorgesehene Übertragungsfrequenz ist.

Erfindungsgemäß sind die Primärwicklung und die Sekundärwicklung derart angeordnet und beabstandet, dass die Streuinduktiviät des Transformators zwischen 1 Mikrohenry und 10 Mikrohenry, vorzugsweise zwischen 1 Mikrohenry und 5 Mikrohenry beträgt.

Diese Streuinduktivität wirkt als in Reihe zur Magnetisierungsinduktivität geschaltet. Dadurch ist es möglich, den Transformator ohne zusätzliche externe Induktivitäten zu betreiben. Durch den Verzicht auf externe Bauelemente kann der erforderliche Bauraum für den Gleichspannungswandler verringert werden.

In einer Ausführungsform umfasst der Magnetkern des Transformators einen U-förmigen oberen Teilkern mit Schenkeln und einen U-förmigen unteren Teilkern mit Schenkeln. Die Schenkel weisen jeweils freie Schenkelenden auf. Die Teilkerne sind in einer Längsrichtung gegenüberliegend so angeordnet, dass die Schenkelenden des oberen und des unteren Teilkerns um einen Luftspalt beabstandet aufeinander zu weisen.

Der Luftspalt ist so eingerichtet, dass die Leerlaufinduktivität des Transformators einen Wert von weniger als 100 Mikrohenry aufweist, wobei die Primärwicklung als Parallelschaltung einer ersten und einer zweiten primären Teilwicklung und die Sekundärwicklung als Parallelschaltung einer ersten und einer zweiten sekundären Teilwicklung ausgebildet ist.

Die erste primäre und die erste sekundäre Teilwicklung sind gemeinsam und gleichsinnig um den linken Schenkel des oberen Teilkerns und den hiervon durch den Luftspalt getrennten linken Schenkel des unteren Teilkerns gewickelt. Mit anderen Worten: sowohl der Wicklungsanfang als auch das Wicklungsende der primären Teilwicklung und der sekundären Teilwicklung liegen entlang der Längsachse an einem gleichen Ende der gemeinsam umwickelten Schenkel des Magnetkerns. Infolgedessen liegen Pluspol und Minuspol beider Teilwicklungen in Längsrichtung L auf der gleichen Seite des Magnetkerns.

In gleicher Weise sind die zweite primäre und die zweite sekundäre Teilwicklung gemeinsam und gleichsinnig um den rechten Schenkel des oberen Teilkerns und den hiervon durch den Luftspalt getrennten rechten Schenkel des unteren Teilkerns gewickelt.

Erfindungsgemäß ist eine primäre Teilwicklung von der um gleiche Schenkel gewickelten sekundären Teilwicklung radial jeweils derart beabstandet, dass die Streuinduktiviät des Transformators zwischen 1 Mikrohenry und 10 Mikrohenry, vorzugsweise zwischen 1 Mikrohenry und 5 Mikrohenry beträgt.

Ein Vorteil dieser Anordnung der primären und sekundären Teilwicklungen besteht darin, dass dadurch platzsparend eine zusätzliche Streuinduktivität des Transformators erzeugt wird, mit der eine zusätzliche externe Induktivität ersetzt werden kann. Dadurch ist es möglich, Gleichspannungswandler mit besonders kleiner Bauform herzustellen.

Bei einer Ausführungsform sind die Teilwicklungen so angeordnet, dass der Pluspol einer Teilwicklung jeweils am oberen Teilkern und der Minuspol einer Teilwicklung jeweils am unteren Teilkern anliegen. Ein Vorteil dieser Ausführungsform besteht in einer besonders platzsparenden Bauweise und in einer guten Übertragungseffizienz.

Bei einer Ausführungsform der Erfindung ist die radiale Reihenfolge der um die linken Schenkel angeordneten Teilwicklungen gegenüber der radialen Reihenfolge der um die rechten Schenkel angeordneten Teilwicklungen vertauscht. Mit anderen Worten: liegt auf den linken Schenkeln die primäre Teilwicklung innen und somit innerhalb der sekundären Teilwicklung, so ist auf den rechten Schenkeln die sekundäre Teilwicklung innenliegend und somit innerhalb der primären Teilwicklung angeordnet. Eine jeweils umgekehrte Anordnung ist gleichfalls möglich.

Ein Vorteil dieser Ausführungsform besteht darin, dass die Streuinduktivität symmetrisch verteilt ist. Dadurch kann ein Gleichspannungswandler nach dieser Ausführungsform besonders gut, das heißt: mit näherungsweise gleichem Übertragungsverhalten, bidirektional betrieben werden.

Bei einer Ausführungsform der Erfindung wird eine fehlende Streuinduktivität auf mindestens einer Seite des Transformators durch eine zusätzliche externe Resonanzinduktivität ergänzt. Dadurch ist es möglich, eine unsymmetrische Verteilung des Streuflusses zwischen der Primärwicklung und der Sekundärwicklung zu kompensieren und somit einen bidirektionalen Betrieb des Gleichspannungswandlers zu ermöglichen. Zudem ist es möglich, eine durch die Geometrie und Beabstandung der Primärwicklung und der Sekundärwicklung nur unzureichend ausgebildete Streuinduktivität zu ergänzen.

Bei einer Ausführungsform der Erfindung ist der Transformator für eine bidirektionale n:1 Wandlung, vorzugsweise für eine 1:1 Wandlung einer Eingangsspannung von 200 Volt bis 2000 Volt und eine maximale Übertragungsleistung von 500 Kilowatt eingerichtet. Gleichspannungswandler für diesen Spannungs- und Leistungsbereich sind von besonderer praktischer Bedeutung.

Bei einer Ausführungsform der Erfindung ist der Transformator für eine Übertragungsfrequenz von zwischen 50 Kilohertz und 100 Kilohertz, vorzugsweise von 90 Kilohertz, eingerichtet. Derartige Transformatoren sind leicht herstellbar. Zudem sind Resonanzkreise, die einen solchen Transformator im überresonanten Modus speisen, mit verfügbaren Bauelementen, insbesondere mit verfügbaren Resonanzkondensatoren, die als Keramickondensatoren ausgebildet sind, leicht und günstig herstellbar.

In einer Ausführungsform der Erfindung ist der Gleichspannungswandler als DAB SRC Gleichspannungswandler ausgebildet, wobei die Resonanzkondensatoren für eine Resonanzfrequenz ausgelegt sind, die um höchstens 10% kleiner als die für den Betrieb des Transformators vorgesehene Übertragungsfrequenz ist.

Bei einer Ausführungsform der Erfindung weisen die Resonanzkondensatoren gleiche Kapazitäten auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Schalttopologie eines DAB SRC Gleichspannungswandlers und
- FIG 2: schematisch einen Längsschnitt durch einen Magnetkreis eines Transformators eines DAB SRC Gleichspannungswandlers.

Einander entsprechende Teile sind in allen Figuren mit den gleichen Bezugszeichen versehen.

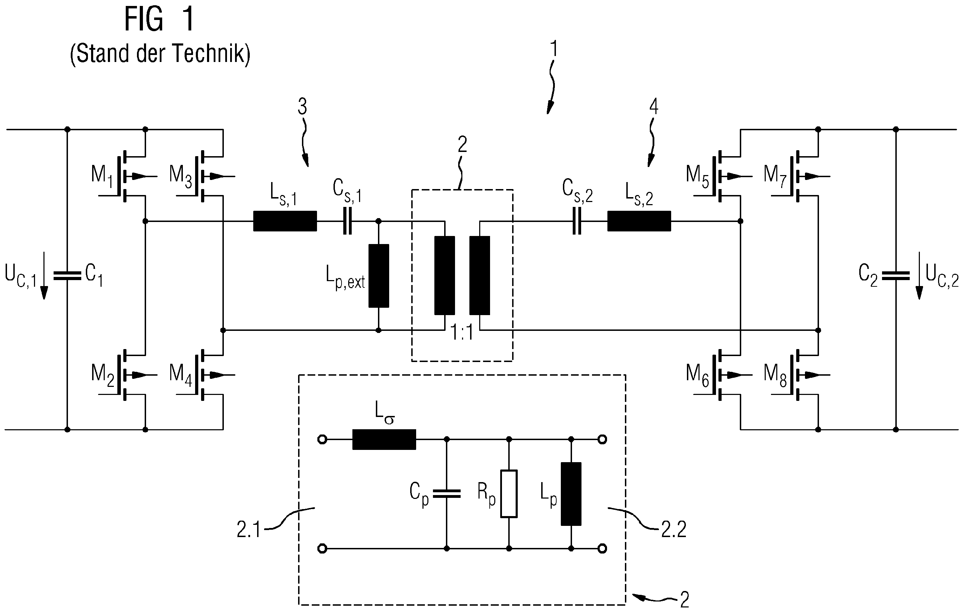

FIG 1 zeigt schematisch die elektrische Schaltung eines Gleichspannungswandlers 1 nach dem Stand der Technik, der als DAB SRC DC-DC Wandler ausgebildet ist und bidirektional zwischen einer ersten Spannung ***U*_{*C*,1}** und einer zweiten Spannung ***U*_{*C*,2}** wandelt, die über einer ersten Kapazität ***C*₁** beziehungsweise über einer zweiten Kapazität ***C*₂** abfällt.

Der Gleichspannungswandler 1 umfasst einen Transformator 2 mit einem Übertragungsverhältnis 1:1. In der folgenden Darstellung wird angenommen, dass der Transformator 2 primärseitig von der ersten Spannung ***U*_{*C*,1}** gespeist wird. Da der Gleichspannungswandler 1 bidirektional betreibbar ist, können die Primär- und die Sekundärseite des Transformators 2 in einer anderen Betriebsweise aber auch vertauscht werden.

In einer Ersatzschaltung kann der Transformator 2 als Zweitor dargestellt werden, bei welchem parallel zum Ausgangstor 2.2 eine Parallelschaltung der Magnetisierungsinduktivität ***Lₚ*** mit der Kapazität ***Cₚ*** und dem Ohmschen Widerstand ***Rₚ*** angeordnet ist und in Reihe zum Eingangstor 2.1 die Streuinduktivität ***L_{σ}*** angeordnet ist.

Parallel zur Primärspule des Transformators 2 ist eine Induktivität *L_{p,ext}* geschaltet, die nach dem Stand der Technik als externes diskretes Bauelement ausgebildet ist. In Reihe zur dieser Induktivität *L_{p,ext}* sind eine erste Resonanzinduktivität ***L*_{*S,*1}** und ein erster Resonanzkondensator *C*_{*S*,1} geschaltet und bilden gemeinsam einen ersten, in der vorliegend betrachteten Betriebsweise primärseitigen Resonanzkreis 3. Mittels der Schaltelemente ***M*₁, *M*₂, *M*₃, *M*₄**, die vorliegend als MOSFET Transistoren ausgebildet sind, wird der primärseitige Resonanzkreis 3 getaktet und somit erregt.

Analog dazu ist sekundärseitig ein zweiter Resonanzkreis 4 angeordnet, der eine zweite Resonanzinduktivität ***L*_{*s,*2}** und ein zweiter Resonanzkondensator ***C*_{*s*,2}** umfasst und mittels der ebenfalls als MOSFET Transistoren ausgebildeten Schaltelemente ***M*₅, *M*₆, *M*₇, *M*₈** taktbar ist.

Die Induktivitäten ***L*_{*s,*1}, *L_{s,2}*, *L_{p,ext}*** werden im Stand der Technik als diskrete Bauelemente ausgebildet.

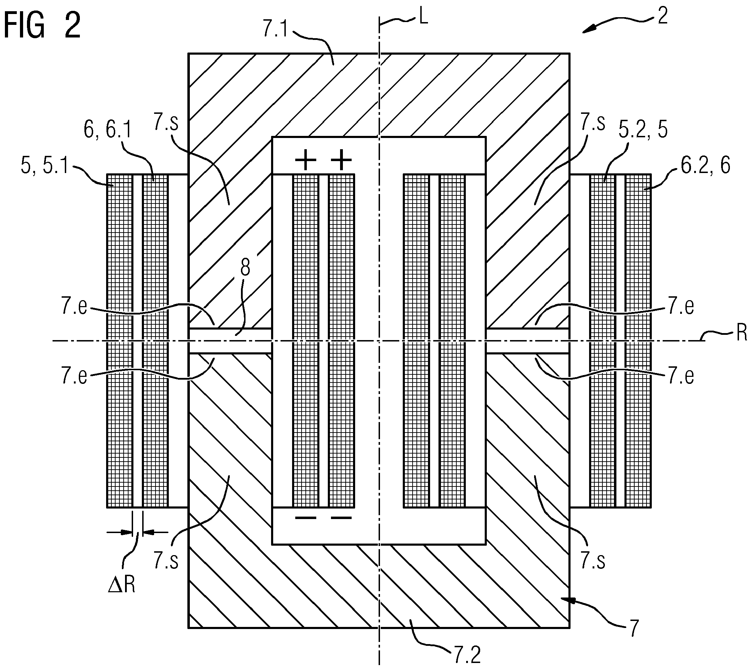

FIG 2 zeigt einen Längsschnitt durch einen Transformator 2 eines Gleichspannungswandlers 1 gemäß einer Ausführungsform der Erfindung. Der Transformator 2 umfasst eine erste und zweite primäre Teilwicklung 5.1, 5.2, welche in Reihe geschaltet sind und gemeinsam die primäre Wicklung 5 bilden, sowie eine erste und zweite sekundäre Teilwicklung 6.1, 6.2, die ebenfalls in Reihe geschaltet sind und gemeinsam die Sekundärwicklung 6 bilden.

Die Wicklungen 5, 6 sind aus Hochfrequenzlitze mit einer Umspinnung oder Isolation hergestellt.

Die Teilwicklungen 5.1, 5.2, 6.1, 6.2 umschließen teilweise einen Magnetkern 7 aus magnetisch leitfähigem Material, beispielsweise aus Ferrit. Der Magnetkern 7 umfasst einen oberen und einen unteren Teilkern 7.1, 7.2, welche U-förmig geformt und mit Schenkeln 7.s entlang einer Längsachse L aufeinander zuweisend angeordnet sind, wobei die Schenkelenden 7.e der gegenüberliegenden Teilkerne 7.1, 7.2 durch einen Luftspalt 8 getrennt voneinander beabstandet sind.

Die erste primäre Teilwicklung 5.1 und die erste sekundäre Teilwicklung 6.1 erstrecken sich entlang der Längsrichtung L um die linken Schenkel 7.s der Teilkerne 7.1, 7.2 und sind gleichsinnig gewickelt. Die zweite primäre Teilwicklung 5.2 und die zweite sekundäre Teilwicklung 6.2 sind gleichsinnig um die beabstandeten rechten Schenkel 7.s des oberen und unteren Teilkerns 7.1, 7.2 gewickelt.

Aufgrund des gleichen Drehsinns der Wicklungen liegen sowohl der Wicklungsanfang als auch das Wicklungsende einer primären Teilwicklung 5.1, 5.2 und einer sekundären Teilwicklung 6.1, 6.2 entlang der Längsachse L am jeweils gleichen Ende des gemeinsam umwickelten Schenkels 7.s.

Infolgedessen liegen Pluspol + und Minuspol - der linken Teilwicklungen 5.1, 6.1 in Längsrichtung L auf der gleichen Seite des Magnetkerns 7. Ebenso liegen Pluspol + und Minuspol - der rechten Teilwicklungen 5.2, 6.2 in Längsrichtung L auf der gleichen Seite des Magnetkerns 7.

Die um die linken Schenkel 7.s gewickelte erste primäre Teilwicklung 5.1 ist in einer radialen Richtung R bezogen auf die linken Schenkel 7.s außenliegend, das heißt: die um den linken Schenkel 7.s gewickelte erste sekundäre Teilwicklung 6.1 umschließend, angeordnet.

Demgegenüber sind die um die rechten Schenkel 7.s gewickelten zweiten Teilwicklungen 5.2, 6.2 in radialer Richtung R vertauscht angeordnet, so dass die zweite sekundäre Teilwicklung 6.2 die zweite primäre Teilwicklung 5.2 umschließt.

Die gleiche Schenkel 7.s umwickelnden primären und sekundären Teilwicklungen 5.1, 5.2, 6.1, 6.2 sind in radialer Richtung R jeweils um einen radialen Abstand **Δ*R*** beabstandet.

Der radiale Abstand **Δ*R*** ist so bemessen, dass die Streuinduktivität ***L_{σ}*** des Transformators 2 gegenüber abstandsfrei übereinander gewickelten Teilwicklungen 5.1, 5.2, 6.1, 6.2 um 1 bis 10 Mikrohenry, vorzugsweise um 1 bis 5 Mikrohenry erhöht ist.

In Längsrichtung L sind die Schenkelenden 7.e des oberen Teilkerns 7.1 von den Schenkelenden 7.e des unteren Teilkerns 7.2 um einen Luftspalt 8 beabstandet. Der Luftspalt 8 ist so bemessen, dass die Leerlaufinduktivität des Transformators 2 auf einen Wert von unter 100 Mikrohenry abgesenkt ist.

Durch die mittels des radialen Abstands **Δ*R*** erhöhte Streuinduktivität ***L_{σ}*** kann der Transformator 2 ohne externe induktive Bauelemente betrieben werden. Dadurch ist es möglich, die induktiven Bauelemente des Resonanznetzwerkes eines Gleichspannungswandlers 1 in der Bauform zu minimieren und einen kleinen Bauraum für einen solchen Gleichspannungswandler 1 zu ermöglichen.

Der Transformator 2 ist für eine bidirektionale n:1, vorzugsweise für eine 1:1 Wandlung von 200 Volt bis 2000 Volt mit einer maximalen Übertragungsleistung von 500 Kilowatt eingerichtet.

In einem Ausführungsbeispiel umfasst ein Gleichspannungswandler 1 den Transformator 2, wobei beidseitig des Transformators 2 jeweils ein nicht näher dargestellter Resonanzkondensator vorgesehen ist, der als Keramikkondensator ausgeführt ist.

Ein solcher Gleichspannungswandler 1 wird als LLC Gleichstromwandler oder als DAB SRC Gleichstromwandler mit einer Übertragungsfrequenz von zwischen 50 Kilohertz bis 100 Kilohertz, vorzugsweise mit einer Übertragungsfrequenz von 90 Kilohertz betrieben.

Die beidseitig des Transformators 2 angeordneten Resonanzkondensatoren ***C*_{*s,*1}**, ***C*_{*s*,2}** sind für eine Resonanzfrequenz ausgelegt, die kleiner als die kleinste im Betrieb des Gleichspannungswandlers 1 verwendete Übertragungsfrequenz ist. Wenn der Gleichspannungswandler als DAB SRC Gleichspannungswandler ausgebildet ist, sind die Resonanzkondensatoren ***C*_{*s*,1}**, ***C*_{*s*,2}** für eine Resonanzfrequenz ausgelegt, die vorzugsweise um höchstens 10% kleiner ist als die kleinste im Betrieb des Gleichspannungswandlers 1 verwendete Übertragungsfrequenz.

In einer Ausführungsform sind bei dem Transformator 2 die auf den linken Schenkeln 7.s angeordneten Teilwicklungen 5.1, 5.2 und die auf den rechten Schenkeln 7.s angeordneten Teilwicklungen 5.2, 6.2 in radialer Richtung R nicht vertauscht. Mit anderen Worten: sowohl auf den linken Schenkeln 7.s als auch auf den rechten Schenkeln 7.s sind die primären Teilwicklungen 5.1, 5.2 jeweils radial außenliegend angeordnet und umschließen die zugeordnete sekundäre Teilwicklung 6.1 beziehungsweise 6.2 jeweils. Alternativ sind sowohl auf den linken Schenkeln 7.s als auch auf den rechten Schenkeln 7.s die primären Teilwicklungen 5.1, 5.2 jeweils radial innenliegend angeordnet und werden von den zugeordneten sekundären Teilwicklung 6.1 beziehungsweise 6.2 jeweils umschlossen.

Bei diesem Ausführungsbeispiel wird die nun auf der Seite mit der jeweils innenliegenden Teilwicklung 5.1, 5.2, 6.1, 6.2 fehlende induktive Streuung durch eine zusätzliche, zu dieser Teilwicklung 5.1, 5.2, 6.1, 6.2 seriell geschaltene externe Resonanzinduktivität ***L*_{*s,*1}*,L*_{*s,*2}** ergänzt.

Bei einer Ausführungsform werden beidseitig die jeweils innenliegenden Teilwicklungen 5.1, 5.2, 6.1, 6.2 durch eine jeweils seriell geschaltene externe Resonanzinduktivität ***L*_{*s,*1}, *L*_{*s,*2}** ergänzt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gleichspannungswandler (1), ausgebildet als LLC-Gleichspannungswandler oder als Dual Active Bridge (DAB) Gleichspannungswandler mit Serienresonanzkreis(SRC), umfassend einen Transformator (2) mit einer Primärwicklung (5) und einer Sekundärwicklung (6), die um einen Magnetkern (7) angeordnet sind, einen ersten Resonanzkreis (3) mit einem ersten Resonanzkondensator (***C*_{*s*,1}**) und einem ersten Schaltnetzwerk von Schaltelementen (***M*₁** bis ***M*₄**) sowie einen zweiten Resonanzkondensator (***C*_{*s*,2}**) und ein zweites Schaltnetzwerk von Schaltelementen (***M*₅** bis ***M*₈**), wobei der erste und der zweite Resonanzkondensator (***C*_{*s*,1}, *C*_{*s*,2}**) jeweils eingangs- beziehungsweise ausgangsseitig in Reihe zum Transformator (2) geschaltet und für eine Resonanzfrequenz eingerichtet sind, die kleiner als die für den Betrieb des Transformators (2) vorgesehene Übertragungsfrequenz ist, wobei die Primärwicklung (5) und die Sekundärwicklung (6) derart angeordnet und beabstandet sind, dass die Streuinduktiviät (***L_{σ}***) des Transformators (2) zwischen 1 Mikrohenry und 10 Mikrohenry, vorzugsweise zwischen 1 Mikrohenry und 5 Mikrohenry beträgt.

2. Gleichspannungswandler (1) nach Anspruch 1, **da**- **durch gekennzeichnet**, dass der Magnetkern (7) des Transformators (2) einen U-förmigen oberen Teilkern (7.1) mit Schenkeln (7.s) und einen U-förmigen unteren Teilkern (7.2) mit Schenkeln (7.s) umfasst, die in einer Längsrichtung (L) gegenüberliegend so angeordnet sind, dass die Schenkelenden (7.e) des oberen und des unteren Teilkerns (7.1, 7.2) um einen Luftspalt (8) beabstandet aufeinander zu weisen, wobei der Luftspalt (8) so eingerichtet ist, dass die Leerlaufinduktivität des Transformators (2) einen Wert von weniger als 100 Mikrohenry aufweist, wobei die Primärwicklung (5) als Parallelschaltung einer ersten und einer zweiten primären Teilwicklung (5.1, 5.2) und die Sekundärwicklung (6) als Parallelschaltung einer ersten und einer zweiten sekundären Teilwicklung (6.1, 6.2) ausgebildet ist und wobei die erste primäre und sekundäre Teilwicklung (5.1, 6.1) gemeinsam und gleichsinnig um linke Schenkel (7.s) und die zweite primäre und sekundäre Teilwicklung (5.2, 6.2) gemeinsam und gleichsinnig um rechte Schenkel (7.s) gewickelt sind und eine primäre Teilwicklung (5.1, 5.2) von der um gleiche Schenkel (7.s) gewickelten sekundären Teilwicklung (6.1, 6.2) radial jeweils derart beabstandet ist, dass die Streuinduktiviät (***L_{σ}***) des Transformators (2) zwischen 1 Mikrohenry und 10 Mikrohenry, vorzugsweise zwischen 1 Mikrohenry und 5 Mikrohenry beträgt.

3. Gleichspannungswandler (1) nach Anspruch 2, **da- durch gekennzeichnet**, dass der Pluspol (+) der Teilwicklungen (5.1, 5.2, 6.1, 6.2) des Transformators (2) jeweils am oberen Teilkern (7.1) und der Minuspol (-) der Teilwicklungen (5.1, 5.2, 6.1, 6.2) des Transformators (2) jeweils am unteren Teilkern (7.2) angeordnet ist.

4. Gleichspannungswandler (1) nach Anspruch 2 oder 3, **dadurch gekennzeichnet, dass** die radiale Reihenfolge der um die linken Schenkel (7.s) angeordneten Teilwicklungen (5.1, 6.1) gegenüber der radialen Reihenfolge der um die rechten Schenkel (7.s) angeordneten Teilwicklungen (5.2, 6.2) vertauscht ist.

5. Gleichspannungswandler (1) nach einem der vorhergehenden Ansprüche, **dadurch gekennzeichnet, dass** eine fehlende Streuinduktivität (***L_{σ}***) auf mindestens einer Seite des Transformators (2) durch eine zusätzliche externe Resonanzinduktivität (***L*_{*s*,1}, *L*_{*s*,2}**) ergänzt wird.

6. Gleichspannungswandler (1) nach einem der vorhergehenden Ansprüche, **dadurch gekennzeichnet, dass** der Transformator (2) für eine bidirektionale n:1 Wandlung, vorzugsweise für eine 1:1 Wandlung einer Eingangsspannung (***U*_{*C*,1}**) von 200 Volt bis 2000 Volt und eine maximale Übertragungsleistung von 500 Kilowatt eingerichtet ist.

7. Gleichspannungswandler (1) nach einem der vorhergehenden Ansprüche, **dadurch gekennzeichnet, dass** der Transformator (2) für eine Übertragungsfrequenz von zwischen 50 Kilohertz und 100 Kilohertz, vorzugsweise von 90 Kilohertz, eingerichtet ist.

8. Gleichspannungswandler (1) nach einem der vorhergehenden Ansprüche, **dadurch gekennzeichnet, dass** der Gleichspannungswandler (1) als DAB SRC Gleichspannungswandler ausgebildet ist und die Resonanzkondensatoren (***C*_{*s*,1}, *C*_{*s*,2}**) für eine Resonanzfrequenz ausgelegt sind, die um höchstens 10% kleiner als die für den Betrieb des Transformators (2) vorgesehene Übertragungsfrequenz ist.

9. Gleichspannungswandler (1) nach einem der vorhergehenden Ansprüche, **dadurch gekennzeichnet, dass** die Resonanzkondensatoren (***C*_{*s*,1}, *C*_{*s*,2}**) gleiche Kapazitäten aufweisen.
